# EUROPEAN PATENT APPLICATION

(11) **EP 3 038 328 A1**
(43) Date of publication of application: **29.06.2016**
(21) Application number: 15200531.0
(22) Date of filing: 16.12.2015
(51) Int. Cl.: H04L 29/08, G06F 3/14, G06F 9/54

(54) **GETTING APP LIST OF PARTNER DEVICE AND TRANSMITTING SELECTION AND SHARED DATA**

(30) Priority: 24.12.2014 KR 20140188553
(71) Applicant: Samsung Electronics Co., Ltd, Gyeonggi-do 16677 (KR)
(72) Inventor: OH, Chang-Kook, Gyeonggi-do (KR); CHOI, Woo-Jin, Gyeonggi-do (KR)
(74) Representative: Jenkins, Richard Gavin

(57) **Abstract**

A method and apparatus are provided for sharing data of an application. A method of an electronic device includes determining an application list of a partner electronic device; displaying the application list of the partner electronic device; receiving a selection of an application for sharing data from the application list; and transmitting, to the partner electronic device, application selection information and shared data information, based on the selected application.

## Description

### BACKGROUND

### 1. Field of the Disclosure

The present disclosure relates generally to a method and apparatus for sharing data with a partner electronic device.

### 2. Description of the Related Art

An electronic device is often capable of sharing various types of data stored in the electronic device with a partner electronic device, e.g., a partner electronic device that is connected to the electronic device over wired or wireless resources.

### SUMMARY

When electronic devices share data associated with a predetermined application, in order to utilize the data, each of the electronic devices needs to install the predetermined application. Accordingly, an electronic device may have difficulty in sharing data associated with the predetermined application with a partner electronic device that does not support or have the predetermined application installed therein.

Also, it is inconvenient for a user of the electronic device to have to install an application identical to that of a partner electronic device in order to share data, and memory space for the installation of the application in the electronic device is unnecessarily wasted.

An aspect of the present disclosure is to provide a method and apparatus for an electronic device to share data associated with an application with a partner electronic device.

In accordance with an aspect of the present disclosure, an operation method of an electronic device is provided. The method includes determining an application list of a partner electronic device; displaying the application list of the partner electronic device; receiving a selection of an application for sharing data from the application list; and transmitting, to the partner electronic device, application selection information and shared data information, based on the selected application.

In accordance with another aspect of the present disclosure, an operation method of an electronic device is provided. The method includes transmitting an application list to a partner electronic device; receiving, from the partner electronic device, application selection information and shared data information; and executing an application based on the application selection information and the shared data information.

In accordance with another aspect of the present disclosure, an electronic device is provided. The device includes a communication interface configured to establish a communication connection with a partner electronic device; a display; and a processor configured to: determine an application list of the partner electronic device; control the display to display the application list of the partner electronic device; receive a selection of an application for sharing data from the application list; and transmit, to the partner electronic device, application selection information and shared data information, through the communication interface, based on the selected application.

In accordance with another aspect of the present disclosure, an electronic device is provided. The device includes a communication interface configured to establish a communication connection with a partner electronic device; and a processor configured to: transmit an application list to the partner electronic device through the communication interface, receive application selection information and shared data information from the partner electronic device, and execute an application based on the application selection information and the shared data information.

### BRIEF DESCRIPTION OF THE DRAWINGS

The above and other aspects, features, and advantages of certain embodiments of the present disclosure will be more apparent from the following detailed description taken in conjunction with the accompanying drawings, in which:
FIG. 1 illustrates a data sharing system according to an embodiment of the present disclosure;
FIG. 2 illustrates an electronic device according to an embodiment of the present disclosure;
FIG. 3 illustrates a processor of a first electronic device according to an embodiment of the present disclosure;
FIG. 4 illustrates a processor of a second electronic device according to an embodiment of the present disclosure;
FIG. 5 illustrates an application driving device of a second electronic device according to an embodiment of the present disclosure;
FIG. 6 is a flowchart illustrating a method of a first electronic device transmitting data to a second electronic device according to an embodiment of the present disclosure;
FIG. 7 is a flowchart illustrating a method of a second electronic device executing an application based on data provided from a first electronic device according to an embodiment of the present disclosure;
FIG. 8 is a signal flow diagram illustrating a method for sharing data according to an embodiment of the present disclosure;
FIG. 9 is a flowchart illustrating a method of a first electronic device transmitting application information and data to a second electronic device according to an embodiment of the present disclosure;
FIGs. 10A to 10E illustrate screen configurations displayed when a first electronic device transmits application information and data according to an embodiment of the present disclosure;
FIG. 11 is a flowchart illustrating a method of a first electronic device transmitting application information and data to a second electronic device according to an embodiment of the present disclosure;
FIGs. 12A to 12C illustrate screen configurations displayed when a first electronic device transmits application information and data according to an embodiment of the present disclosure;
FIG. 13 is a flowchart illustrating a method of a second electronic device executing an application based on application information and data provided from a first electronic device according to an embodiment of the present disclosure;
FIG. 14 illustrates a screen configuration of an application executed in a second electronic device based on application information and data provided from a first electronic device according to an embodiment of the present disclosure;
FIG. 15 is a flowchart illustrating a method of a first electronic device displaying screen information of a second electronic device according to an embodiment of the present disclosure;
FIG. 16 illustrates a screen configuration when a first electronic device displays screen information of a second electronic device according to an embodiment of the present disclosure;
FIG. 17 is a flowchart illustrating a method of a second electronic device transmitting screen information to a first electronic device according to an embodiment of the present disclosure;
FIG. 18 is a flowchart illustrating a method of a first electronic device establishing a communication connection for sharing data with a second electronic device according to an embodiment of the present disclosure;
FIG. 19 is a flowchart illustrating a method of a second electronic device establishing a communication connection for sharing data with a first electronic device according to an embodiment of the present disclosure;
FIG. 20 is a signal flow diagram illustrating a method for sharing data according to an embodiment of the present disclosure;
FIG. 21 is a flowchart illustrating a method of a first electronic device executing an application based on data provided from a second electronic device according to an embodiment of the present disclosure; and
FIG. 22 is a flowchart illustrating a method of a second electronic device transmitting data to a first electronic device according to an embodiment of the present disclosure.

### DETAILED DESCRIPTION OF EMBODIMENTS OF THE DISCLOSURE

Hereinafter, various embodiments of the present disclosure will be described with reference to the accompanying drawings. In the following description, specific details such as detailed configuration and components are merely provided to assist the overall understanding of these embodiments of the present disclosure. Therefore, it should be apparent to those skilled in the art that various changes and modifications of the embodiments described herein can be made without departing from the scope and spirit of the present disclosure. In addition, descriptions of well-known functions and constructions are omitted for clarity and conciseness.

The present disclosure may have various embodiments, and modifications and changes may be made therein. Therefore, the present disclosure will be described in detail with reference to particular embodiments shown in the accompanying drawings. However, it should be understood that the present disclosure is not limited to the particular embodiments, but includes all modifications/changes, equivalents, and/or alternatives falling within the spirit and the scope of the present disclosure. In describing the drawings, similar reference numerals may be used to designate similar elements.

Herein, the terms "have", "may have", "include", and "may include" used in the various embodiments of the present disclosure indicate the presence of disclosed corresponding functions, operations, elements, and the like, and do not limit additional one or more functions, operations, elements, and the like. In addition, it should be understood that the terms "include" or "have" used in the various embodiments of the present disclosure are to indicate the presence of features, functions, numbers, steps, operations, elements, parts, or a combination thereof described in the specification, but do not preclude the presence or addition of other features, functions, numbers, steps, operations, elements, parts, or a combination thereof.

Further, the terms "A or B", "at least one of A or/and B", and "one or more of A or/and B" include any and all combinations of words enumerated with it. For example, "A or B", "at least one of A and B", and "at least one of A or B" mean (1) including at least one A, (2) including at least one B, or (3) including both at least one A and at least one B.

Although terms such as "first" and "second" may be used in various embodiments of the present disclosure to modify various elements, these terms do not limit the corresponding elements. For example, these terms do not limit an order and/or importance of the corresponding elements. Instead, these terms may be used for the purpose of distinguishing one element from another element. For example, a first user device and a second user device indicate user devices and may indicate different user devices. For example, a first element may be referred to as a second element, without departing from the scope of right of various embodiments of the present disclosure, and similarly, a second element may be referred to as a first element.

When an element (e.g., first element) is "connected to" or "(operatively or communicatively) coupled with/to" to another element (e.g., second element), the first element may be directly connected or coupled to the second element, and there may be an intervening element (e.g., third element) between the first and second elements. However, when an element (e.g., the first element) is "directly connected" or "directly coupled" to another element (e.g., the second element), there is no intervening element (e.g., third element) between the first and second elements.

Further, the expression "configured to (or set to)" may be replaced with "suitable for", "having the capacity to", "designed to", " adapted to", "made to", or "capable of" according to a situation. Also, the term "configured to (set to)" does not necessarily mean "specifically designed to" in a hardware level. Instead, the expression "apparatus configured to..." may mean that the apparatus is "capable of..." along with other devices or parts in a certain situation. For example, "a processor configured to (set to) perform A, B, and C" may be a dedicated processor, e.g., an embedded processor, for performing a corresponding operation, or a generic-purpose processor, e.g., a Central Processing Unit (CPU) or an application processor (AP), capable of performing a corresponding operation by executing one or more software programs stored in a memory device.

As used herein, singular forms may include plural forms as well unless the context explicitly indicates otherwise.

Further, all the terms used herein, including technical and scientific terms, should be interpreted to have the same meanings as commonly understood by those skilled in the art to which the present disclosure pertains, and should not be interpreted to have ideal or excessively formal meanings unless explicitly defined in various embodiments of the present disclosure.

A module or program module according to various embodiments of the present disclosure may further include at least one or more constitutional elements among the aforementioned constitutional elements, or may omit some of them, or may further include additional other constitutional elements. Operations performed by a module, programming module, or other constitutional elements according to various embodiments of the present disclosure may be executed in a sequential, parallel, repetitive, or heuristic manner. In addition, some of the operations may be executed in a different order or may be omitted, or other operations may be added.

Herein, the term "user" may indicate a person who uses an electronic device or a device (e.g., an artificial intelligence electronic device) that uses the electronic device.

Examples of an electronic device as described herein may include a smart phone; a tablet personal computer (PC); a mobile phone; a video phone; an e-book reader; a desktop PC; a laptop PC; a netbook computer; a workstation, a server, a personal digital assistant (PDA); a portable multimedia player (PMP); an MP3 player; a mobile medical device; a camera; and a wearable device (e.g., a head-mount-device (HMD), an electronic glasses, an electronic clothing, an electronic bracelet, an electronic necklace, an electronic appcessory, an electronic tattoo, a smart mirror, or a smart watch).

An electronic device may also be a smart home appliance, such as a television (TV); a digital video disk (DVD) player; an audio component; a refrigerator; an air conditioner; a vacuum cleaner; an oven; a microwave oven; a washing machine; an air cleaner; a set-top box; a home automation control panel; a security control panel; a TV box (e.g., Samsung HomeSync^{®}, Apple TV^{®}, or Google TV); a game console (e.g., Xbox^{®} or PlayStation^{®}); an electronic dictionary; an electronic key; a camcorder; and an electronic frame.

An electronic device may also include a medical device (e.g., a mobile medical device, such as a blood glucose monitoring device, a heart rate monitor, a blood pressure monitoring device, or a temperature meter, a magnetic resonance angiography (MRA) machine, a magnetic resonance imaging (MRI) machine, a computed tomography (CT) scanner, or an ultrasound machine); a navigation device; a global positioning system (GPS) receiver; an event data recorder (EDR); a flight data recorder (FDR); an in-vehicle infotainment device; electronic equipment for a ship (e.g., ship navigation equipment and/or a gyrocompass); avionics equipment; security equipment; a head unit for vehicle; an industrial or home robot; an automatic teller's machine (ATM) of a financial institution; point of sale (POS) device at a retail store; and an internet of things (IoT) device (e.g., a lightbulb, various sensors, an electronic meter, a gas meter, a sprinkler, a fire alarm, a thermostat, a streetlamp, a toaster, a sporting equipment, a hot-water tank, a heater, or a boiler, etc.)

An electronic device may also be a piece of furniture or a building/structure; an electronic board; an electronic signature receiving device; a projector; and various measuring instruments (e.g., a water meter, an electricity meter, a gas meter, or a wave meter).

An electronic device may also include a combination of one or more of the above-described devices.

Further, it will be apparent to those skilled in the art that an electronic device according to various embodiments of the present disclosure is not limited to the above-mentioned devices.

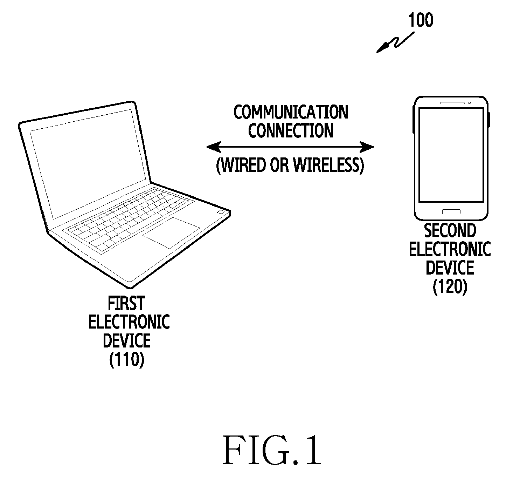

FIG. 1 illustrates a data sharing system according to an embodiment of the present disclosure.

Referring to FIG. 1, the data sharing system 100 includes a first electronic device 110 and a second electronic device 120, which establish and communicate over a wireless or wired communication connection. For example, the first electronic device 110 may be a computer, a tablet PC, and a smart phone, which has a relatively larger display area than the second electronic device 120. For example, the second electronic device 120 may be a smart phone or a tablet PC, which has a relatively smaller display area than the first electronic device 110.

The first electronic device 110 and the second electronic device 120 may establish a communication connection using a short range communication protocol, such as Bluetooth, Bluetooth Low Energy (BLE), and Wireless Local Area Network (WLAN) (for example, WiFi).

The first electronic device 110 may share an application list with the second electronic device 120, through an established communication connection with the second electronic device 120. The first electronic device 110 may also share data associated with a predetermined application with the second electronic device 120, based on the application list.

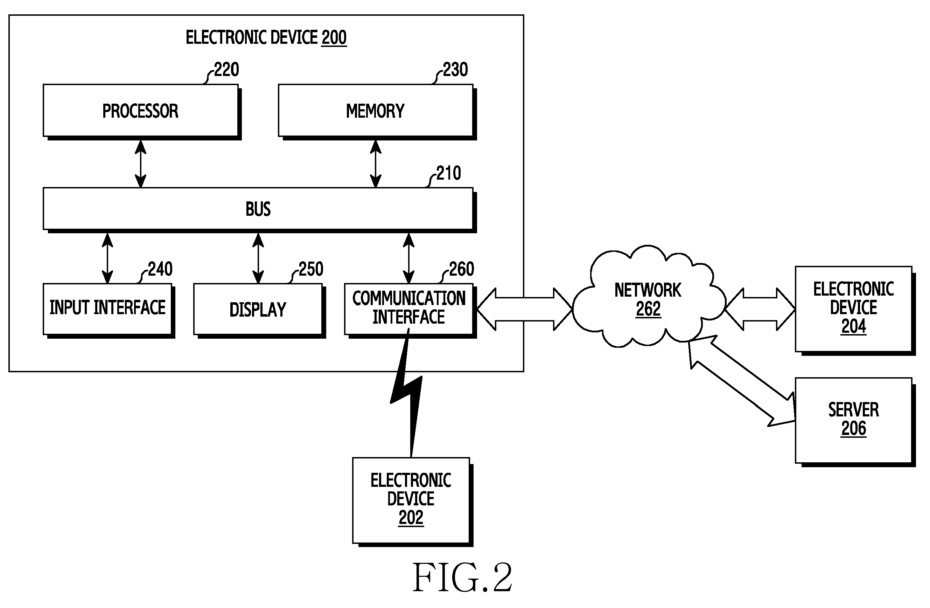

FIG. 2 illustrates an electronic device according to an embodiment of the present disclosure. For example, the first electronic device 110 or the second electronic device 120 of FIG. 1 may be embodied as the electronic device 200 illustrated in FIG. 2.

Referring to FIG. 2, the electronic device 200 includes a bus 210, a processor 220, a memory 230, an input interface 240, a display 250, and a communication interface 260. Alternatively, at least one of the elements of the electronic device 200 may be omitted, or other elements may be additionally included therein.

The bus 210 may be a circuit that connects the above described elements (e.g., the processor 220, the memory 230, the input interface 240, the display 250, and the communication interface 260), and transfers signals (for example, a control message) among the elements.

The processor 220 may include one or more of a Central Processing Unit (CPU), an Application Processor (AP), and a Communication Processor (CP). For example, the processor 220 may execute calculations or data processing associated with a control and/or communication of at least one other element of the electronic device 200.

The processor 220 may control the electronic device 200 to share data of an application with a partner electronic device (for example, an electronic device 202 or an electronic device 204). The processor 220 may also share an application list with the partner electronic device. The processor 220 may execute a control to share the data of a predetermined application with the partner electronic device, based on the application list shared with the partner electronic device.

The memory 230 may store instructions or data relevant to at least one other element of the electronic device 200. For example, the memory 230 may store applications installed in the electronic device 200, and software and/or programs for operating the electronic device 200.

The input interface 240 may include an input device that transfers instructions or data input from a user or another external device to another element (other elements) of the electronic device 200. For example, the input interface 240 may include a key pad, a dome switch, a physical button, a touch panel, a jog & shuttle, and a sensor.

The display 250 displays data, such as various types of contents (e.g., text, images, videos, icons, symbols, etc.). The display 250 may include a Liquid Crystal Display (LCD), a Light Emitting Diode (LED) display, an Organic Light Emitting Diode (OLED) display, a Micro Electro Mechanical System (MEMS) display, or an electronic paper display.

The communication interface 260 connects the electronic device 200 to an external electronic device (i.e., the electronic device 202, the electronic device 204, or the server 206). For example, the communication interface 260 may be connected to a network 262 through wireless communication or wired communication, and may communicate with an external device. The wireless communication may include a short range communication protocol or a cellular communication protocol. Examples of the short range communication protocol include Wireless Fidelity (WiFi), Bluetooth, Near Field Communication (NFC), BLE, Global Positioning System (GPS), and the like.

Examples of the cellular communication protocol include Long Term Evolution (LTE), LTE-Advance (LTE-A), Code Division Multiple Access (CDMA), Wideband CDMA (WCDMA), Universal Mobile Telecommunications System (UMTS), Wireless Broadband (WiBro), Global System for Mobile Communications (GSM), and the like.

Examples of the wired communication include a Universal Serial Bus (USB), a High Definition Multimedia Interface (HDMI), a Recommended Standard 232 (RS-232), and a Plain Old Telephone Service (POTS).

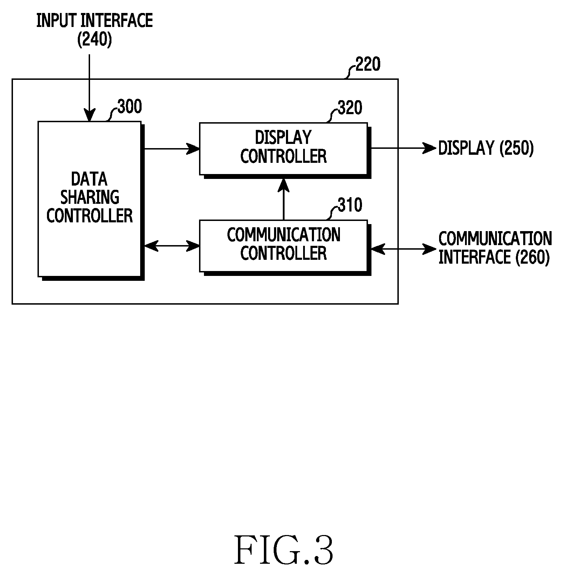

FIG. 3 illustrates a processor of a first electronic device according to an embodiment of the present disclosure.

Referring to FIG. 3, the processor 220 includes a data sharing controller 300, a communication controller 310, and a display controller 320.

The data sharing controller 300 controls sharing data of an application with a partner electronic device. The communication controller 310 controls communication between the electronic device 200 and the partner electronic device with which the data of the application is shared. The display controller 320 controls the display 250 to display information associated with sharing data with the partner electronic device.

The data sharing controller 300 may execute a control to share an application list with the partner electronic device to which the electronic device 200 is connected for communication. For example, when a sharing event occurs, the data sharing controller 300 may transmit, to the communication controller 310, a request signal requesting an application list.

The communication controller 310 may control the communication interface 260 to transmit the request signal requesting an application list, which is provided from the sharing controller 300, to the partner electronic device, in response to the occurrence of the sharing event. When the application list of the partner electronic device is received through the communication interface 260, the communication controller 310 may transmit the application list of the partner electronic device to the data sharing controller 300.

The data sharing controller 300 may transmit, to the display controller 320, the application program list of the partner electronic device provided from the communication controller 310.

The display controller 320 may control the display 250 to display the application program list of the partner electronic device, which is provided from the data sharing controller 300.

The data sharing controller 300 may execute a control to transmit, to the partner electronic device, data to be shared with the partner electronic device and application selection information. For example, the application selection information may include identification information of at least one shared application that is selected from the application list of a second electronic device in order to share data. The data sharing controller 300 may detect data to be shared with the partner electronic device, based on input information detected through the input interface 240.

The data sharing controller 300 may select a shared application from the application list of the partner electronic device, based on input information detected through the input interface 240. The data sharing controller 300 may transmit, to the communication controller 310, application selection information (for example, an application identifier) and data.

Additionally, the data sharing controller 300 may transmit, to the communication controller 310, destination information (for example, a destination telephone number) for transmitting data through the partner electronic device.

The communication controller 310 may control the communication interface 260 to transmit, to the partner electronic device, data to be shared with the partner electronic device and application selection information, which are determined in the data sharing controller 300. Additionally, the communication controller 310 may control the communication interface 260 to additionally transmit, to the partner electronic device, destination information (for example, a destination telephone number) for transmitting data through the partner electronic device, which is provided from the data sharing controller 300.

The communication controller 310 may also transmit at least one screen sharing data provided from the partner electronic device through the communication interface 260, to the data sharing controller 300 or the display controller 320.

The data sharing controller 300 may transmit, to the display controller 320, the screen sharing data provided from the partner electronic device.

The display controller 320 may control the display 250 to display the screen sharing data, which is provided from the data sharing controller 300 or the communication controller 310. For example, the display controller 320 may control the display 250 to display the screen sharing data, provided from the partner electronic device, in different windows for each application.

The data sharing controller 300 may transmit, to the communication controller 310, input information corresponding to each window displayed on the display 250 together with application information displayed on a corresponding window.

The data sharing controller 300 may transmit, to the communication controller 310, communication connection event occurrence information associated with a communication connection between the electronic device 200 and the partner electronic device.

The communication controller 310 may establish a communication connection with the partner electronic device in response to the communication connection event occurrence information provided by the data sharing controller 300. For example, the communication controller 310 may transmit a communication connection request signal to the partner electronic device with which the electronic device 200 is to share data, through the communication interface 260, in response to the communication connection event occurrence information. When a communication connection grant signal is received from the partner electronic device, the communication controller 310 may establish the communication connection for sharing data with the partner electronic device. However, when a communication connection restriction signal is received from the partner electronic device, the communication controller 310 may transmit, to the controller 320, communication connection restriction information associated with communication connection with the partner electronic device.

The display controller 320 may control the display 250 to display the communication connection restriction information associated with the communication connection with the partner electronic device, which is provided from the communication controller 310.

The communication controller 310 may transmit data provided by the partner electronic device through the communication interface 260, to the data sharing controller 300.

The data sharing controller 300 may execute data provided from the partner electronic device. For example, when data transmitted by the partner electronic device is received from the communication controller 310, the data sharing controller 300 may select an application corresponding to the characteristic of the corresponding data, from the applications installed in the electronic device 200. The data sharing controller 300 may execute the application based on the data provided by the partner electronic device.

The display controller 320 may control the display 250 to display application execution information.

In FIG. 3, the processor 220 may include a plurality of modules (e.g. the data sharing controller 300, the communication controller 310, and the display controller 320) for sharing data between the electronic device 200 and the partner electronic device.

Alternatively, at least one of the data sharing controller 300, the communication controller 310, and the display controller 320 may be functionally or physically separated from the processor 220.

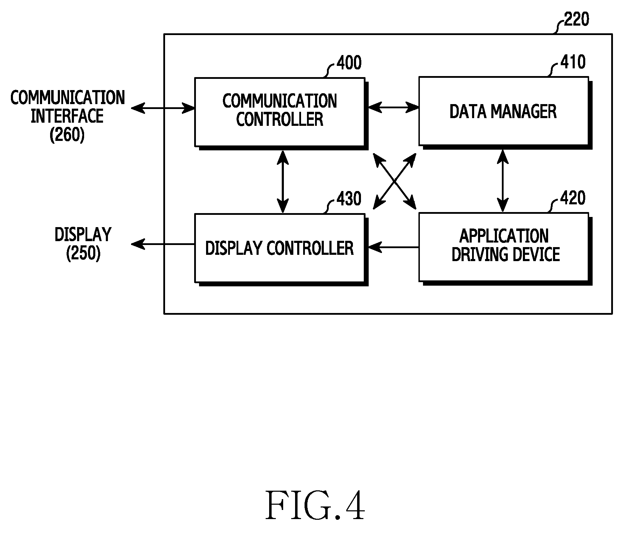

FIG. 4 illustrates a processor of a second electronic device according to an embodiment of the present disclosure.

Referring to FIG. 4, the processor 220 includes a communication controller 400, a data manager 410, an application driving device 420, and a display controller 430.

The communication controller 400 controls a communication connection between the electronic device 200 and a partner electronic device with which data is shared. The data manager 410 controls the sharing of data with the partner electronic device. The application driving device 420 executes an application. The display controller 430 controls the display 250 to display data sharing information associated with data sharing with the partner electronic device.

The communication controller 400 may transmit, to the data manager 410, a request signal requesting an application list, which is received from the partner electronic device through the communication interface 260.

The data manager 410 may generate a list of at least one application installed in the electronic device 200, in response to the request signal requesting the application list, which is provided from the communication controller 400. For example, the data manager 410 may generate a list of applications to be shared with the partner electronic device, from among applications installed in the electronic device 200. The data manager 410 may transmit the application list to the communication controller 400.

The communication controller 400 may control the communication interface 260 to transmit, to the partner electronic device, the application list of the electronic device 200, which is provided from the data manager 410.

The communication controller 400 may transmit, to the data manager 410 or the application driving device 420, application selection information and data, which are received from the partner electronic device through the communication interface 260. The data manager 410 may transmit, to the application driving device 420, the application selection information and data, which are provided from the communication controller 400.

The application driving device 420 may execute an application corresponding to the application selection information received from the partner electronic device, based on the data provided from the communication controller 400 or the data manager 410. For example, the application driving device 420 may execute the application corresponding to the application selection information, and may provide a service corresponding to the data provided from the communication controller 400 or the data manager 410. When the application corresponding to the application selection information is currently being executed, the application driving device 420 may provide a service corresponding to the data provided from the communication controller 400 or the data manager 410, using the corresponding application.

The display controller 430 may control the display 250 to display application execution information, which is executed by the application driving device 420. For example, the display controller 430 may store and manage screen sharing data of a corresponding application using different buffers for each application that is executed by the application driving device 420.

When a communication connection request signal for sharing data is received from the partner electronic device through the communication interface 260, the communication controller 400 may determine whether to establish a communication connection with the partner electronic device. For example, the communication controller 400 may determine whether it is possible to establish a communication connection with the partner electronic device, based on a current load on the electronic device 200, a load on a communication network, a signal strength between the electronic device and the partner electronic device, etc.

The communication controller 400 may control the communication interface 260 to transmit, to the partner electronic device, information indicating whether to establish the communication connection with the partner electronic device.

When communication with the partner electronic device is connected through the communication controller 400, the display controller 430 may control the display 250 to display the communication connection information.

The display controller 430 may transmit, to the data manager 410 or the communication controller 400, screen sharing data associated with each application that is executed by the application driving device 420. The data manager 410 may transmit, to the communication controller 400, the screen sharing data provided from the display controller 430.

The communication controller 400 may control the communication interface 260 to transmit, to the partner electronic device, the screen sharing data which is provided from the data manager 410 or the display controller 430.

The data manager 410 may transmit data to be shared with the partner electronic device to the communication controller 400, in response to a sharing event. For example, the data manager 410 may determine data to be shared with the partner electronic device, based on input information detected through the input interface 240.

The communication controller 400 may control the communication interface 260 to transmit, to the partner electronic device, the data to be shared with the partner electronic device, which is provided from the data manager 410.

In FIG. 4, the processor 220 may include a plurality of modules (e.g. the communication controller 400, the data manager 410, the application driving device 420, and the display controller 430) for sharing data between the electronic device 200 and the partner electronic device.

Alternatively, at least one of the communication controller 400, the data manager 410, the application driving device 420, and the display controller 430 may be functionally or physically separated from the processor 220.

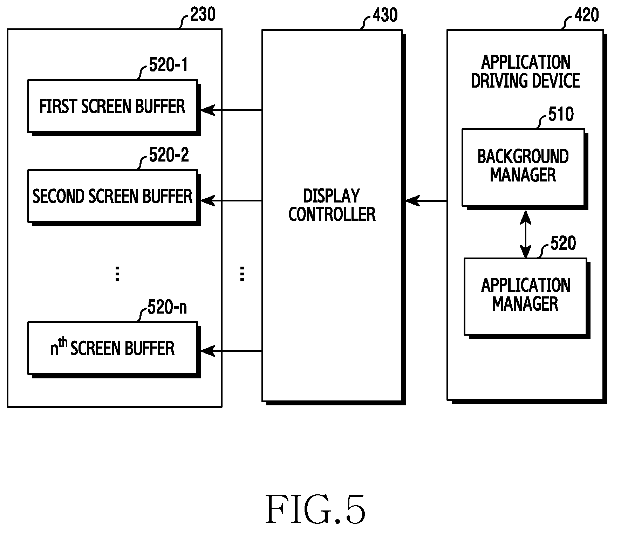

FIG. 5 illustrates an application driving device of a second electronic device according to an embodiment of the present disclosure.

Referring to FIG. 5, the application driving device 420 includes a background manager 510 and an application manager 520.

The application manager 520 may execute an application corresponding to application selection information provided from a partner electronic device, based on data provided from the partner electronic device. For example, the application manager 520 may execute a control to begin the execution of an application corresponding to the application selection information received from the partner electronic device, based on the data received from the communication controller 400 or the data manager 410.

The background manager 510 may control driving an application that operates in the background. For example, when a new application is executed by the application manager 520, the background manager 510 may execute a control to operate at least one currently executed application in the background.

The display controller 430 may control the display 250 to display application execution information provided from the application manager 520.

The display controller 430 may store screen configuration data associated with an application displayed on the display 250 and an application that is executed in the background, in different buffers 520-1 to 520-N for each application. The display controller 430 may generate screen sharing data corresponding to screen configuration data stored in each buffer, and transmit the same to the communication controller 400 or the data manager 410. For example, the screen configuration data and the screen sharing data may be configured based on an identical data format.

According to various embodiments of the present disclosure, an electronic device is provided. The device includes a communication interface that establishes a communication connection with a partner electronic device, a display, and a processor that determines an application list of the partner electronic device, controls the display to display the application list of the partner electronic device, receives a selection of an application for sharing data from the application list, and transmits, to the partner electronic device, application selection information and shared data information through the communication interface, based on the selected application.

According to various embodiments of the present disclosure, the communication connection with the partner electronic device is wirelessly or wiredly, and wherein the wireless communication includes at least one of Bluetooth, Bluetooth Low Energy (BLE), and Local Area Network (LAN).

According to various embodiments of the present disclosure, the processor transmits, to the partner electronic device, a request signal requesting the application list, through the communication interface, and receives the application list from the partner electronic device, in response to the request signal.

According to various embodiments of the present disclosure, the shared data information includes execution data of the selected application.

According to various embodiments of the present disclosure, the processor receives screen sharing data from the partner electronic device, control the display to display an execution screen of the selected application, based on the screen sharing data, detects shared data of the selected application, based on the execution screen of the application, and transmits the shared data of the selected application to the partner electronic device through the communication interface.

According to various embodiments of the present disclosure, the display displays the execution screen of the selected application in a different display area than a display area of an execution screen of at least one other application.

According to various embodiments of the present disclosure, the processor controls the display to display the execution screen of the selected application based on the screen sharing data that includes a structure of the execution screen and information for an object included in the application execution screen.

According to various embodiments of the present disclosure, an electronic device is provided. The device includes a communication interface that establishes a communication connection with a partner electronic device, and a processor that transmits an application list to the partner electronic device through the communication interface, receives application selection information and shared data information from the partner electronic device, and executes an application based on the application selection information and the shared data information.

According to various embodiments of the present disclosure, the communication connection is wirelessly or wiredly, and wherein the wireless communication includes at least one of Bluetooth, Bluetooth Low Energy (BLE), and Local Area Network (LAN).

According to various embodiments of the present disclosure, the processor generates the application list in response to a request signal requesting the application list, which is received from the partner electronic device, and transmits the application list to the partner electronic device through the communication interface.

According to various embodiments of the present disclosure, the processor selects at least one application that is sharable with the partner electronic device from among applications installed in the electronic device, and generates the application list using a list of the selected at least one application.

According to various embodiments of the present disclosure, the device may further include a display that displays an execution screen of the application.

According to various embodiments of the present disclosure, the device further includes a memory, wherein the processor may store screen configuration data corresponding to the execution screen of the application in a separate memory area that is distinguished from another application.

According to various embodiments of the present disclosure, the processor transmits screen sharing data corresponding to the application to the partner electronic device through the communication interface, receives shared data of the application from the partner electronic device, and controls the display to display an application execution screen corresponding to the shared data of the application.

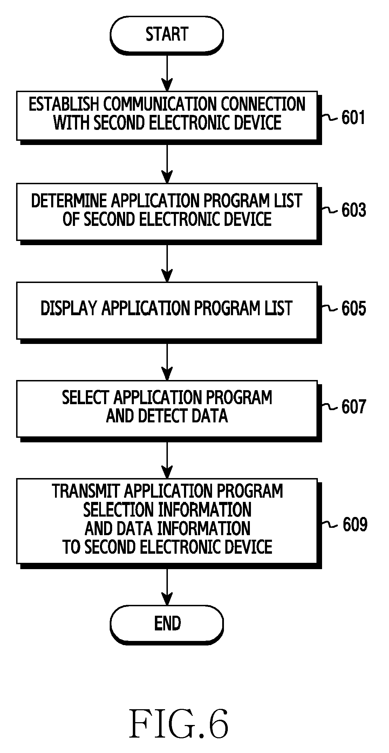

FIG. 6 is a flowchart illustrating a method of a first electronic device transmitting data to a second electronic device according to an embodiment of the present disclosure.

Referring to FIG. 6, in operation 601, a first electronic device (for example, the first electronic device 110) establishes a communication connection with a second electronic device (for example, the second electronic device 120), e.g., wirelessly or wired.

In operation 603, the first electronic device determines an application list of the second electronic device. For example, the first electronic device may transmit an application list request signal to the second electronic device, in response to the occurrence of a sharing event. The first electronic device may then receive the application list from the second electronic device.

In operation 605, the first electronic device displays the application list of the second electronic device on a display thereof.

In operation 607, the first electronic device detects data to be shared with the second electronic device, and selects an application for sharing the corresponding data. For example, the first electronic device may select an application for sharing data from the application list of the second electronic device, based on input information detected through an input interface.

In operation 609, the first electronic device transmits, to the second electronic device, data to be shared with the second electronic device and application selection information. For example, the first electronic device may generate a transmission packet including the data and the application selection information, and transmit the generated transmission packet to the second electronic device. The first electronic device may configure the data and the application selection information as different types of signals, and transmit the signals to the second electronic device.

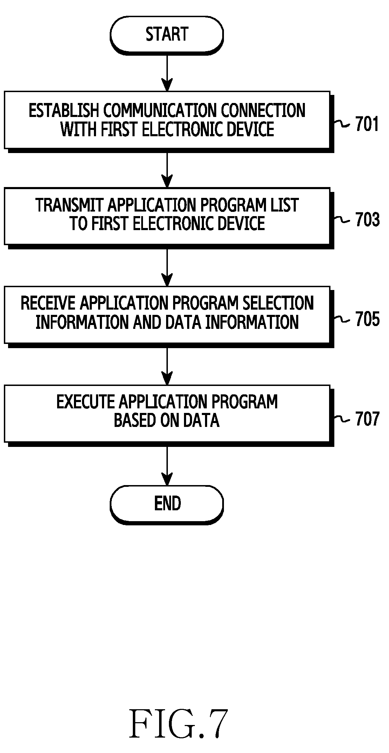

FIG. 7 is a flowchart illustrating a method of a second electronic device executing an application based on data provided from a first electronic device according to an embodiment of the present disclosure.

Referring to FIG. 7, in operation 701, a second electronic device (for example, the second electronic device 120) establishes a communication connection with a first electronic device (for example, the first electronic device 110), e.g., wirelessly or wired.

In operation 703, the second electronic device transmits an application list of the second electronic device to the first electronic device. For example, the second electronic device may transmit the application list of the second electronic device to the first electronic device that is connected for communication, in response to the occurrence of a sharing event. The second electronic device may transmit, to the first electronic device, the application list of the second electronic device, in response to an application list request signal received from the first electronic device.

In operation 705, the second electronic device receives data and application selection information from the first electronic device. For example, the application selection information may include an identifier of an application that is selected, by the first electronic device, from the applications included in the application list of the second electronic device.

In operation 707, the second electronic device executes an application corresponding to the application selection information, based on the data received from the first electronic device. For example, the second electronic device displays, on a display thereof, application execution information including the data received from the first electronic device.

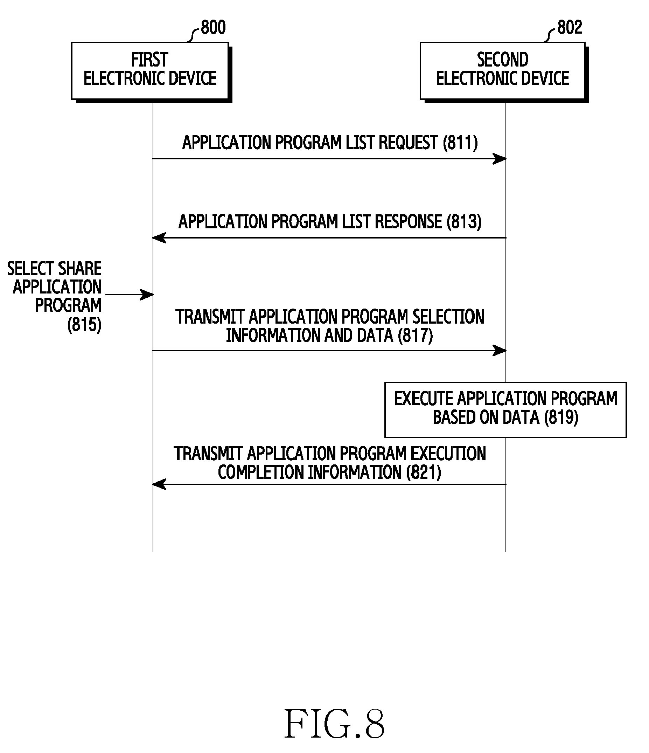

FIG. 8 is a signal flow diagram illustrating a method for sharing data according to an embodiment of the present disclosure.

Referring to FIG. 8, a first electronic device 800 (for example, the first electronic device 110) may establishes a communication connection with a second electronic device 802 (for example, the second electronic device 120), wirelessly or wired.

In operation 811, the first electronic device 800 transmits an application list request signal to the second electronic device 802, in response to the occurrence of a sharing event.

In operation 813, the second electronic device 802 transmits, to the first electronic device 800, an application list of the second electronic device 802, in response to the application list request signal. For example, the application list of the second electronic device 802 may include information associated with at least one application that may be sharable with the first electronic device among the applications installed in the second electronic device 802.

The first electronic device 800 may display the application list of the second electronic device 802 on a display thereof.

In operation 815, the first electronic device 800 selects data to be shared with the second electronic device 802 and a share application. For example, the first electronic device 800 may select an application for sharing data, based on the application list of the second electronic device 802.

In operation 817, the first electronic device 800 transmits the data to be shared with the second electronic device 802 and the application selection information to the second electronic device 802. For example, the first electronic device 800 generates a transmission packet including the data to be shared with the second electronic device 802 and the application selection information, and transmits the transmission packet to the second electronic device 802.

In operation 819, the second electronic device 802 executes an application corresponding to the application selection information, based on the data provided from the first electronic device 800. For example, the second electronic device 802 executes an application corresponding to the application execution information. The second electronic device 802 may display the data provided from the first electronic device 800, using an execution screen of the application.

In operation 821, the second electronic device 802 transmits application execution completion information to the first electronic device in operation 821.

Alternatively, the second electronic device 802 may omit the transmission of the application execution completion information of the second electronic device 802.

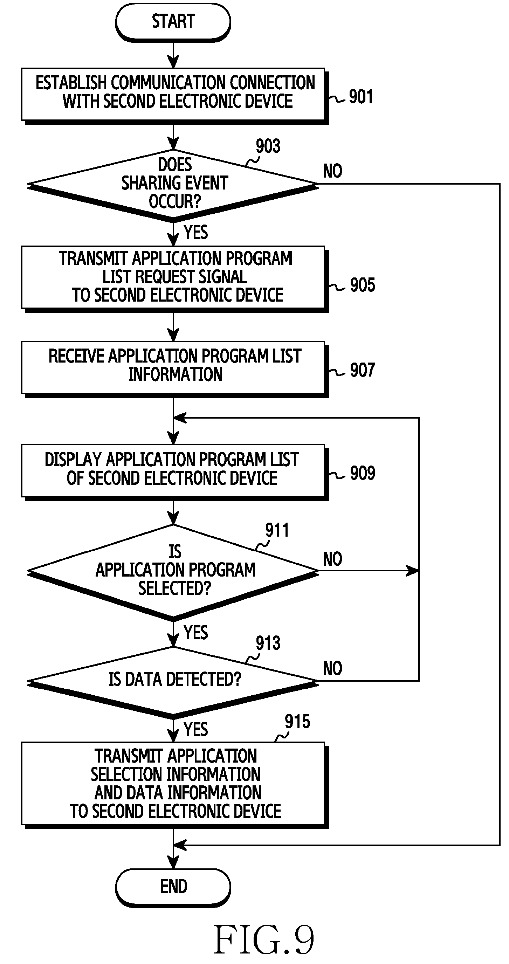

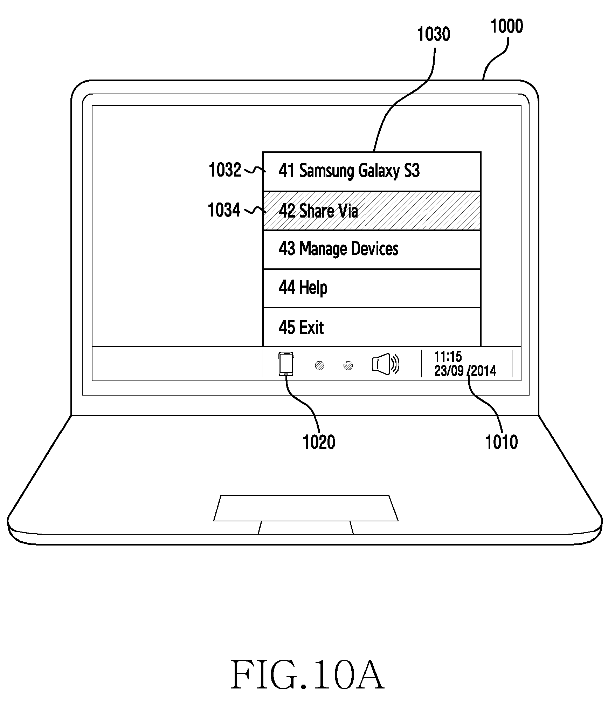

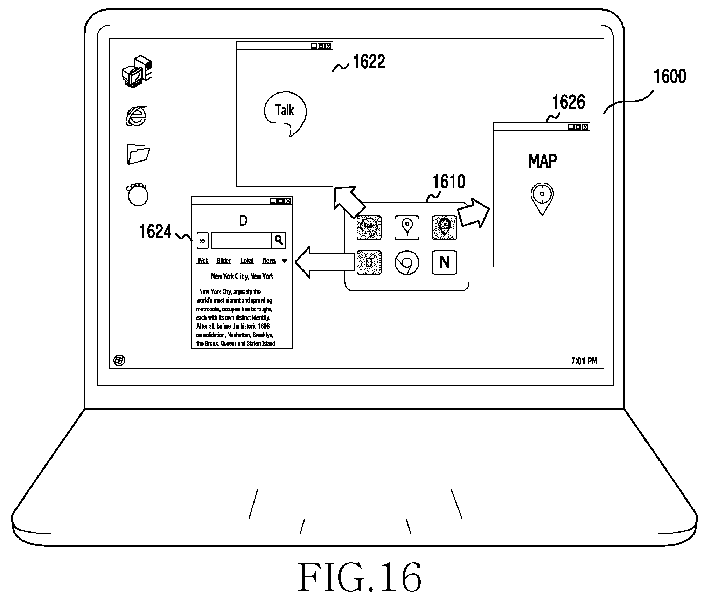

FIG. 9 is a flowchart illustrating a method of a first electronic device transmitting application information and data to a second electronic device according to an embodiment of the present disclosure. FIGs. 10A to 10E illustrate screen configurations displayed when a first electronic device transmits application information and data according to an embodiment of the present disclosure. FIG. 16 illustrates a screen configuration when a first electronic device displays screen information of a second electronic device according to an embodiment of the present disclosure.

Referring to FIG. 9, in operation 901, a first electronic device (for example, the first electronic device 110 or 800) may establishes a communication connection with a second electronic device (for example, the second electronic device 120 or 802), wirelessly or wired.

In operation 903, the first electronic device detects whether a sharing event occurs. For example, the first electronic device determines whether a control instruction associated with the occurrence of a sharing event is detected, based on input information detected through an input interface. The control instruction may be generated by selecting a menu, an icon, or a hardware button that corresponds to the sharing event.

For example, as illustrated in FIG. 10A, a first electronic device displays communication connection information 1020 associated with a communication connection established with a second electronic device in an area 1010 of a display 1000. The first electronic device also displays a connection control menu 1030 associated with a connection established with the second electronic device in another area of the display 1000, in response to selecting the communication connection information 1020. For example, the connection control menu 1030 includes state information 1032 of the second electronic device, i.e., Samsung Galaxy S3. The first electronic device may determine whether a sharing menu 1034 included in the connection control menu 1030 is selected, based on input information detected through an input interface.

Referring again to FIG. 9, in operation 905, when the sharing event is detected, the first electronic device transmits an application list request signal to the second electronic device.

In operation 907, the first electronic device receives an application list from the second electronic device, in response to the application list request signal. For example, the application list of the second electronic device may include information associated with at least one application that may is sharable with the first electronic device from among the applications installed in the second electronic device.

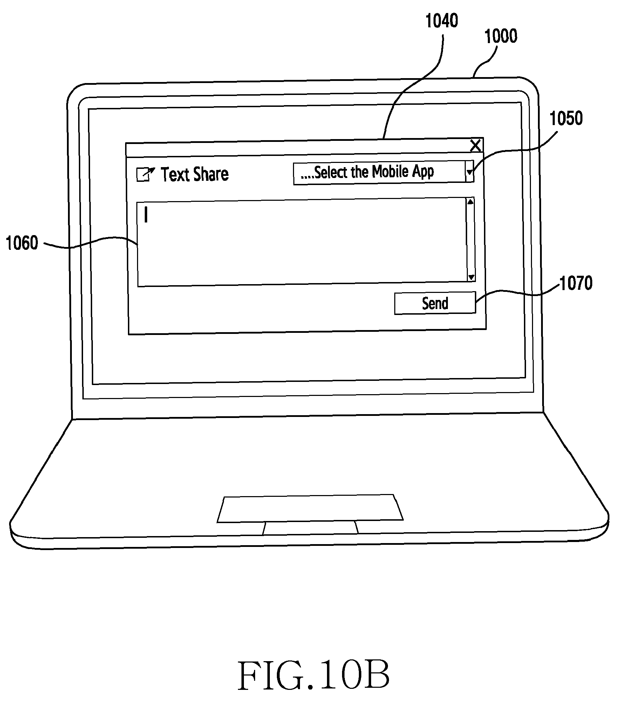

In operation 909, the first electronic device displays the application list of the second electronic device on the display. For example, referring to FIG. 16, the first electronic device displays, on the display, an icon of each application program included in the application list 1610 of the second electronic device. As illustrated in FIG. 10B, the first electronic device may display a shared data input screen 1040 including an application selection area 1050, in an area of the display 1000. The shared data input screen 1040 further includes a shared data input area 1060 and a transmission button 1070. The application selection area 1050 may include the application list of the second electronic device.

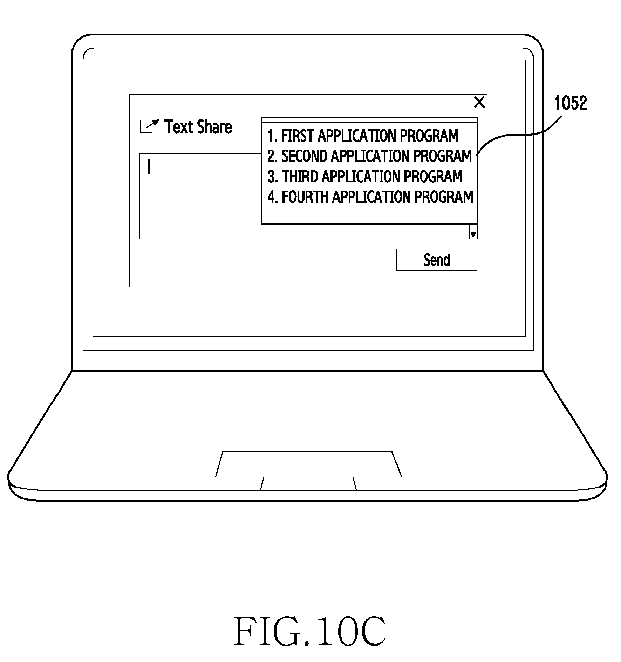

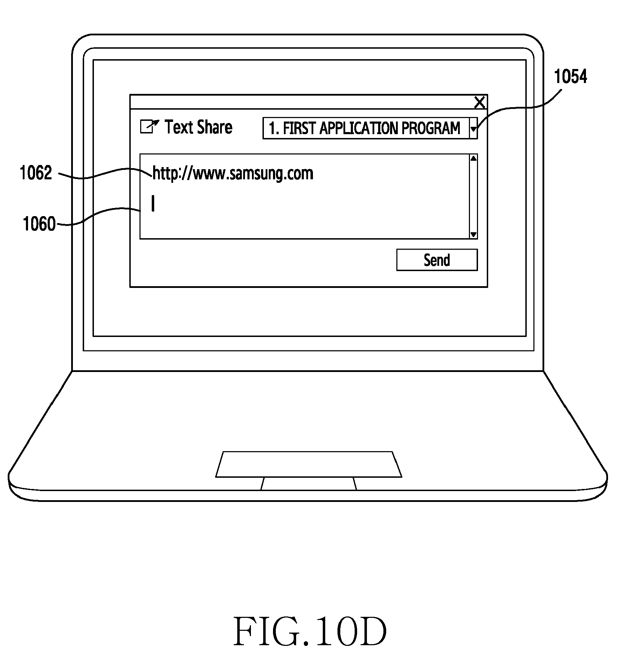

Referring again to FIG. 9, in operation 911, the first electronic device determines whether a share application is selected from the application list of the second electronic device. For example, the first electronic device displays an application list 1052 of the second electronic device on the display, as illustrated in FIG. 10C, in response to a user selecting the application selection area 1050 illustrated FIG. 10B. The first electronic device may determine whether a share application is selected from the application list 1052 of the second electronic device, based on input information detected through an input interface. When a share application is selected, the first electronic device may display information 1054 associated with the selected application in the application selection area 1050, as illustrated in FIG. 10D.

Referring again to FIG. 9, in operation 909, the first electronic device maintains displaying the application list of the second electronic device, when a share application is not selected in operation 911. For example, when a user input is not detected until a reference time is over after a point in time when the application list of the second electronic device is displayed, the first electronic device may recognize that sharing data with the second electronic device is terminated. Accordingly, the first electronic device may stop displaying the shared data input screen 1040 from the display.

In operation 913, the first electronic device determines whether data to be shared with the second electronic device is detected, when a share application is selected in operation 911. For example, the first electronic device may determine whether data (e.g., a Uniform Resource Locator (URL)) to be shared with the second electronic device is input, based on input information detected through an input interface.

Referring again to FIG. 10D, when the data to be shared with the second electronic device is detected, the first electronic device may display the detected data 1062 in the shared data input area 1060.

Referring again to FIG. 9, in operation 915, the first electronic device transmits, to the second electronic device, application selection information and data information, when the data to be shared with the second electronic device is detected in operation 913.

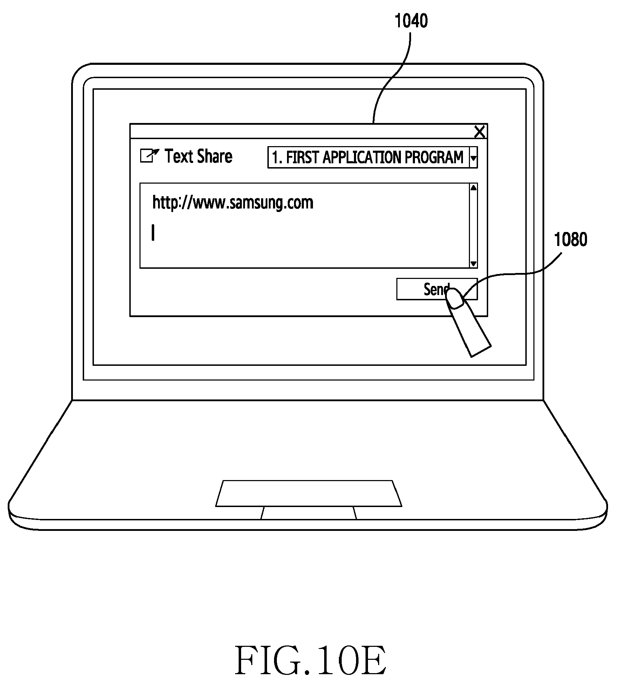

For example, as illustrated in FIG. 10E, when an input (for example, a touch) provided on the transmission button 1080 of the shared data input screen is detected, the first electronic device may configure the application selection information and the data displayed in the shared data input screen 1040 as a single transmission packet, which the first electronic device may transmit to the second electronic device.

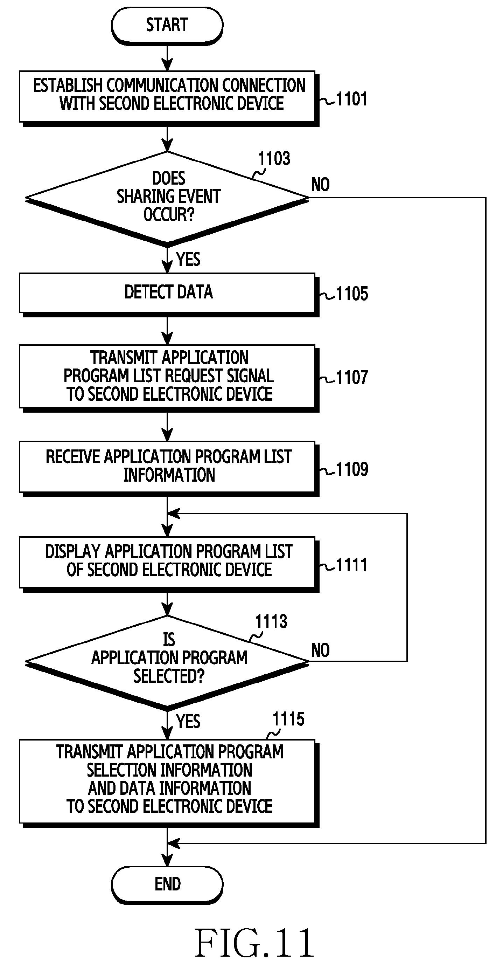

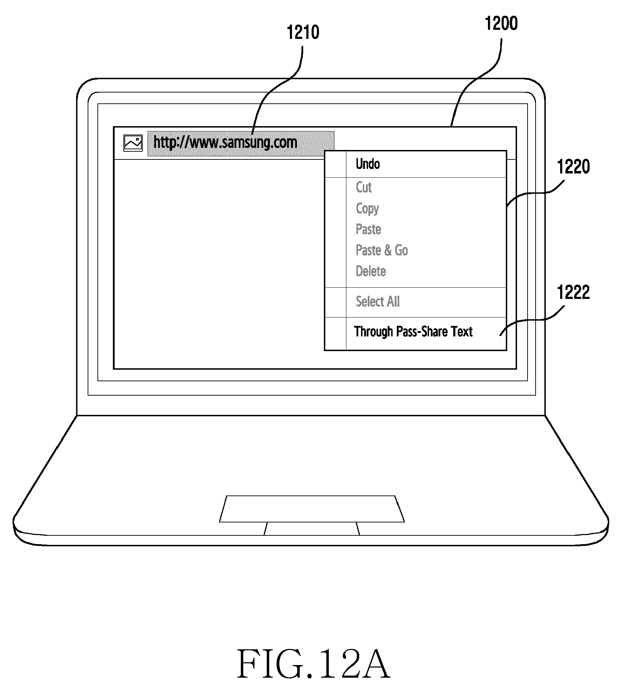

FIG. 11 is a flowchart illustrating a method of a first electronic device transmitting application information and data to a second electronic device according to an embodiment of the present disclosure. FIGs. 12A to 12C illustrate screen configurations displayed when a first electronic device transmits application information and data according to an embodiment of the present disclosure.

Referring to FIG. 11, in operation 1101, a first electronic device (for example, the first electronic device 110 or 800) may establishes a communication connection with a second electronic device (for example, the second electronic device 120 or 802), wirelessly or wired.

In operation 1103, the first electronic device determines whether a sharing event occurs.

For example, as illustrated in FIG. 12A, the first electronic device displays an Internet search screen (e.g., a web browser) 1200 on a display. The first electronic device may then determine whether a sharing event occurs, based on a context menu 1220 associated with an Internet address (URL) 1210. For example, the first electronic device displays a context menu based on right clicking through a mouse or selecting a menu display button.

Referring again to FIG. 11, in operation 1105, the first electronic device detects data to be shared with the second electronic device, when a sharing event occurs in operation 1103.

For example, referring again to FIG. 12A, the first electronic device may recognize that a sharing event occurs when the selecting of a share menu 1222 (e.g., through pass-share text) of the context menu 1220 displayed in at least some area of the display is detected. The first electronic device may detect the Internet address 1210 for which the context menu is set, as the data to be shared with the second electronic device, in response to the occurrence of the sharing event.

Referring again to FIG. 11, in operation 1107, the first electronic device transmits an application list request signal to the second electronic device that is connected for communication.

In operation 1109, the first electronic device receives an application list from the second electronic device. For example, an application list of the second electronic device may be received that includes information associated with at least one application that is sharable with the first electronic device from among the applications installed in the second electronic device.

In operation 1111, the first electronic device displays the data to be shared with the second electronic device and the application list of the second electronic device.

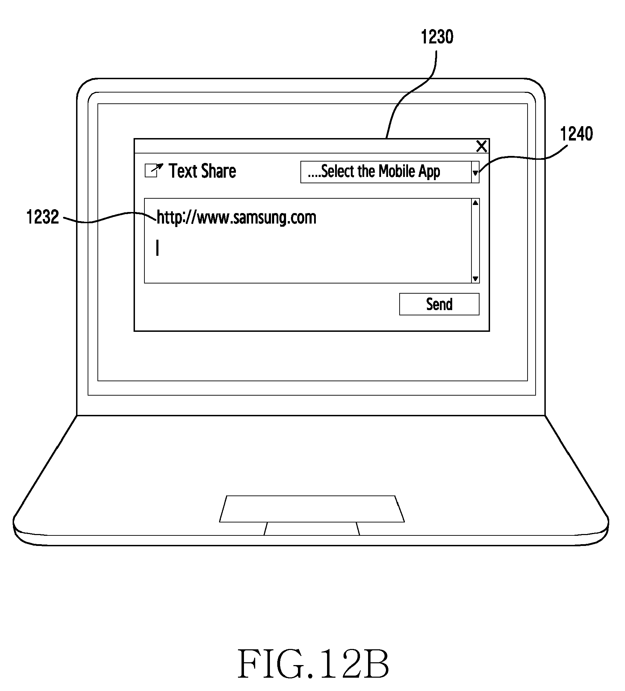

For example, as illustrated in FIG. 12B, the first electronic device displays a shared data input screen 1230 including an application selection area 1240, in an area of the display. The first electronic device also displays the data 1232 (i.e., the URL) detected in step 1105, in the shared data input area of the shared data input screen 1230.

Referring again to FIG. 11, in operation 1113, the first electronic device determines whether a share application is selected from the application list of the second electronic device.

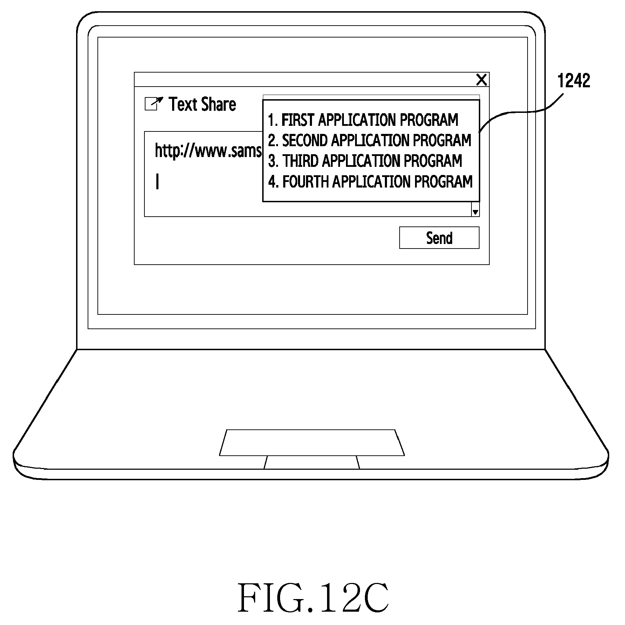

For example, as illustrated in FIG. 12C, the first electronic device displays an application list 1242 of the second electronic device on the display, in response to selecting the application selection area 1240 of FIG. 12B. The first electronic device may determine whether a share application is selected from the application list 1242 of the second electronic device, based on input information detected through an input interface. When the share application (for example, a first program) is selected, the first electronic device displays information 1054 associated with the selected application in the application selection area 1050, as illustrated in FIG. 10D.

Referring again to FIG. 11, when a share application is not selected in operation 1113, the first electronic device maintains displaying the application list of the second electronic device in operation 1111. For example, when a user input is not detected until a reference time is over from a point in time when the application list of the second electronic device is first displayed, the first electronic device may stop displaying the shared data input screen 1230.

In operation 1115, the first electronic device transmits, to the second electronic device, application selection information and data information, when the shared application is selected in operation 1113.

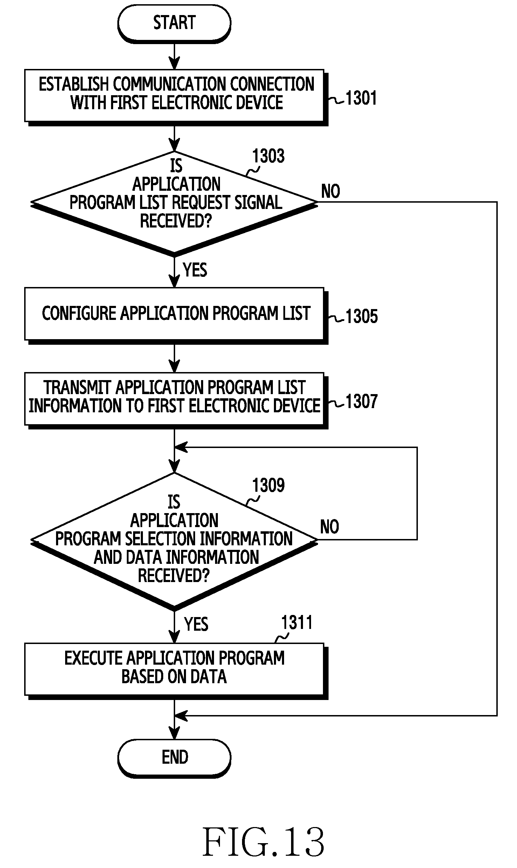

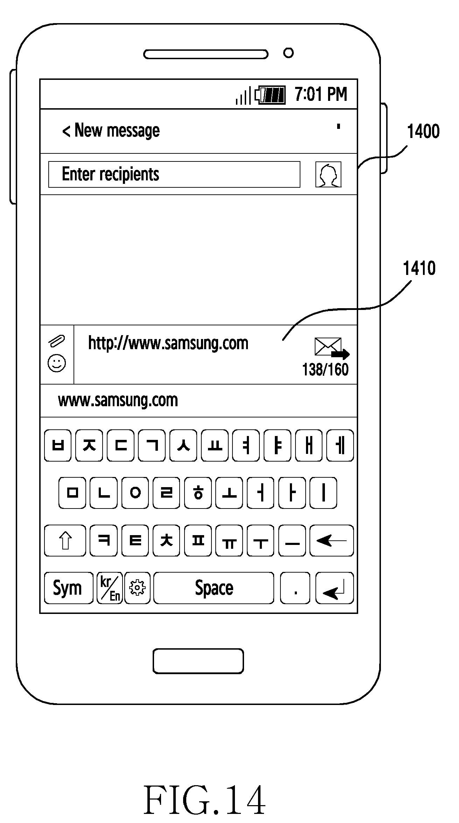

FIG. 13 is a flowchart illustrating a method of a second electronic device executing an application based on application information and data provided from a first electronic device according to an embodiment of the present disclosure. FIG. 14 illustrates a screen configuration of an application executed in a second electronic device based on application information and data provided from a first electronic device according to an embodiment of the present disclosure.

Referring to FIG. 13, in operation 1301, a second electronic device (for example, the second electronic device 120 or 802) may establishes a communication connection with a first electronic device, (for example, the first electronic device 110 or 800) wirelessly or wired.

In operation 1303, the second electronic device determines whether an application list request signal is received from the first electronic device that is connected for communication.

In operation 1305, the second electronic device configures an application list of the second electronic device, in response to the application list request signal received in operation 1303. For example, the second electronic device may generate an application list that includes information associated with at least one application that is sharable with the first electronic device from among the applications installed in the second electronic device.

In operation 1307, the second electronic device transmits the application list of the second electronic device to the first electronic device.

In operation 1309, the second electronic device determines whether application selection information and data information is received from the first electronic device. For example, the second electronic device may determine whether a transmission packet including the application selection information and the data information is received from the first electronic device.

In operation 1311, the second electronic device executes an application corresponding to the application selection information, based on the data received from the first electronic device, when the application selection information and the data information are received in operation 1309.

For example, as illustrated in FIG. 14, the second electronic device executes a messenger program 1400 corresponding to the application selection information. The second electronic device may input, in a message input field of the messenger program, the data 1410 (i.e., samsung.com) received from the first electronic device.

The second electronic device may set destination information provided from the first electronic device as a destination of the data received from the first electronic device. For example, the second electronic device may display a friend list (destination address list) of the messenger program, to which the data received from the first electronic device is to be transmitted. The second electronic device may execute a web browser corresponding to the application selection information, which displays a web page associated with the data (e.g., a URL) received from the first electronic device.

For example, the second electronic device may input, in the message input field of the messenger program 1400, the data 1410 received from the first electronic device, when the messenger program 1400 corresponding to the application selection information is executed.

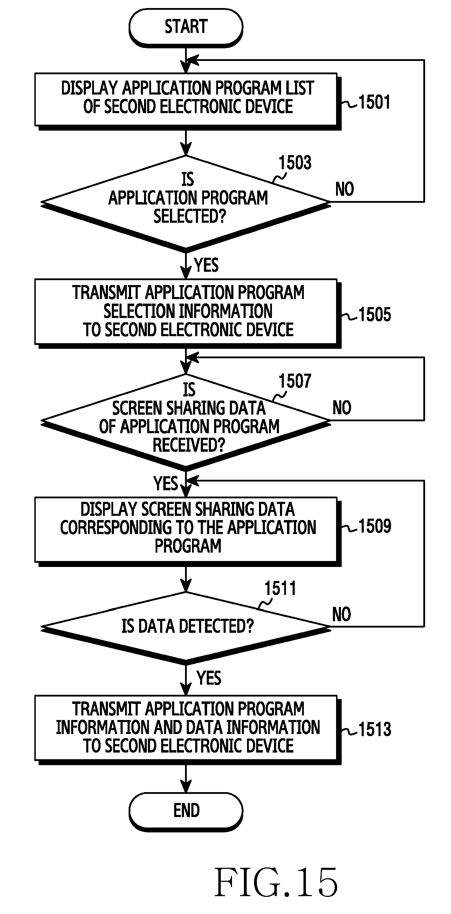

FIG. 15 is a flowchart illustrating a method of a first electronic device displaying screen information of a second electronic device according to an embodiment of the present disclosure.

Referring to FIG. 15, in operation 1501, a first electronic device (for example, the first electronic device 110 or 800) may displays an application list of a second electronic device (for example, the second electronic device 120 or 802) that is connected for communication. For example, the first electronic device may display an application list received from the second electronic device on a display, as described above in steps 901 to 907 of FIG. 9.

In operation 1503, the first electronic device determines whether a share application is selected from the application list of the second electronic device. For example, the first electronic device determines whether an input for selecting a share application from the application list of the second electronic device displayed on the display is detected.

When a share application is not selected, the first electronic device maintains displaying the application list of the second electronic device in operation 1501. For example, when a user input is not detected for a certain period of time after the application list of the second electronic device first being displayed, the first electronic device may stop displaying the application list. That is, the first electronic device may determine that sharing data with the second electronic device is not being executed and stop displaying the application list.

In operation 1505, the first electronic device transmits, to the second electronic device, application selection information, when the share application is selected in operation 1503. For example, the first electronic device transmits application selection information and data associated with the share application to the second electronic device. The data associated with the share application may include screen sharing data request information or data to be shared with the second electronic device through the share application.

In operation 1507, the first electronic device determines whether screen sharing data of an application is received from the second electronic device.

In operation 1509, the first electronic device displays an application execution screen based on the screen sharing data, when the screen sharing data of the application is received from the second electronic device in operation 1507. For example, the first electronic device may display an execution screen of a corresponding application using different windows for each application.

For example, as illustrated in FIG. 16, the first electronic device displays, on an area of a display 1600, a messenger program execution screen 1622, a web browser execution screen 1624, and a map program execution screen 1626. Although not illustrated the first electronic device may display other execution screens, e.g., a camera program execution screen, using different windows.

Referring again to FIG. 15, in operation 1511, the first electronic device determines whether data to be shared with the second electronic device is detected. For example, the first electronic device may determine whether a data input is detected through an execution screen of a predetermined application from among a plurality of application execution screens displayed on the display.

In operation 1509, the first electronic device maintains displaying the application execution screen, when the data to be shared with the second electronic device is not detected in operation 1511.

In operation 1513, the first electronic device transmits, to the second electronic device, application selection information and data information, when the data to be shared with the second electronic device is detected in operation 1511. For example, the first electronic device may select an application, as a share application, through which inputting the data to be shared with the second electronic device is detected.

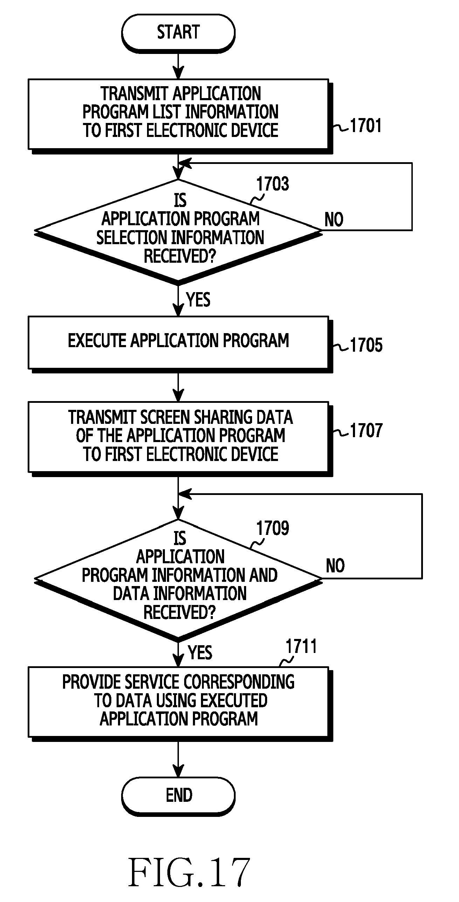

FIG. 17 is a flowchart illustrating a method of a second electronic device transmitting screen information to a first electronic device according to an embodiment of the present disclosure.

Referring to FIG. 17, in operation 1701, a second electronic device (for example, the second electronic device 120 or 802) may transmits an application list to a first electronic device (for example, the first electronic device 110 or 800) that is connected for communication. For example, the second electronic device may transmit the application list of the second electronic device to the first electronic device, as described above in operations 1301 to 1307 of FIG. 13.

In operation 1703, the second electronic device determines whether application selection information is received from the first electronic device.

In operation 1705, the second electronic device executes an application corresponding to the application selection information, when the application selection information is received from the first electronic device in operation 1703. For example, the second electronic device may execute the application corresponding to application selection information as a background. For example, the second electronic device may display an execution screen of the application corresponding to the application selection information. For example, the second electronic device may store screen configuration information of applications executed in the second electronic device, in different buffers.

In operation 1707, the second electronic device transmits, to the first electronic device, screen sharing data of the application corresponding to the application selection information. For example, the second electronic device may generate screen sharing data corresponding to the execution screen of the application. The second electronic device may transmit the screen sharing data to the first electronic device. The screen sharing data may include at least one of a structure of an application execution screen and object information displayed in an execution screen.

In operation 1709, the second electronic device determines whether application selection information and data information is received from the first electronic device.

In operation 1711, when application selection information and data information is received, the second electronic device provides a service corresponding to the data received from the first electronic device, using the application (e.g., the application executed in operation 1705) corresponding to the application selection information. For example, the second electronic device may provide a service corresponding to the data received from the first electronic device, using the executed application corresponding to the application selection information from among the applications executed in the background. The second electronic device may display an execution screen of the application corresponding to the data information. The second electronic device may input the data received from the first electronic device, into a message input field of a messenger program. The second electronic device may capture an image (e.g., a preview image) through a camera program based on the data received from the first electronic device. The second electronic device may transmit the captured image to the first electronic device.

Additionally, the second electronic device may store the captured image in a memory.

For example, the second electronic device may photograph a video through a camera program based on the data received from the first electronic device. The second electronic device may transmit the photographed video data to the first electronic device in real time (e.g., a streaming service). The first electronic device may store video data provided from the second electronic device in a memory or an external storage device that is functionally or physically connected with the first electronic device. Additionally, the first electronic device may display the video data provided from the second electronic device.

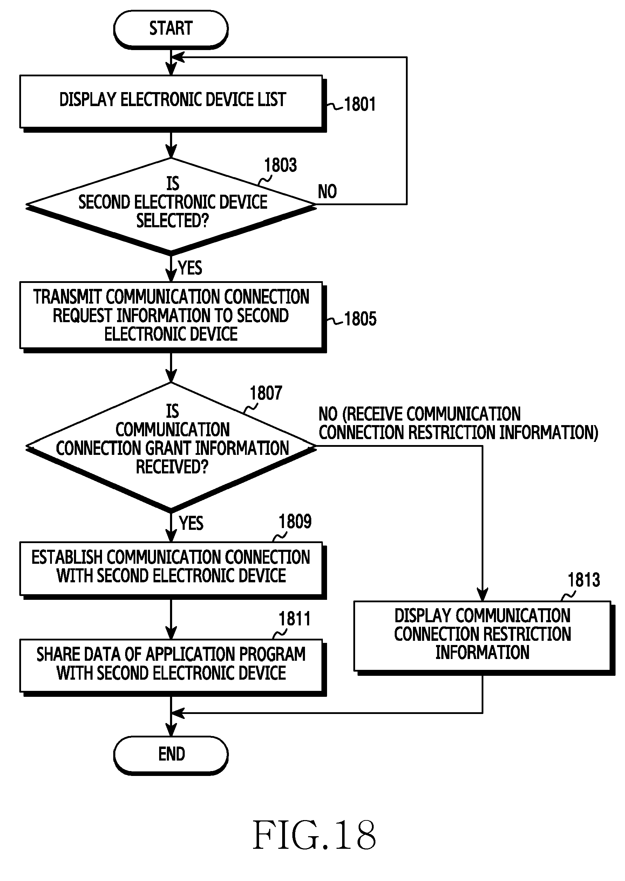

FIG. 18 is a flowchart illustrating a method of a first electronic device establishing a communication connection for sharing data with a second electronic device according to an embodiment of the present disclosure.

Referring to FIG. 18, in operation 1801, a first electronic device (for example, the first electronic device 110 or 800) may displays a list of electronic devices that are connectable for communication. For example, the first electronic device may display a list of at least one other electronic device to which a sharing service has been provided, in response to the occurrence of a sharing event.

In operation 1803, the electronic device determines whether the second electronic device for a sharing service is selected from the electronic device list. For example, the first electronic device may determine whether an input for selecting the second electronic device is detected through an input interface.

In operation 1801, the first electronic device maintains displaying the electronic device list, when the second electronic device for a sharing service is not selected in operation 1803.

In operation 1805, the first electronic device transmits communication connection request information to the second electronic device, when the second electronic device is selected for a service sharing in operation 1803.

In operation 1807, the first electronic device determines whether communication connection grant information is received from the second electronic device, in response to the communication connection request information.

In operation 1809, the first electronic device establishes a communication connection with the second electronic device, when the communication connection grant information is received from the second electronic device in operation 1807.

In operation 1811, the first electronic device shares data of an application with the second electronic device that is connected for communication. For example, the first electronic device transmits application selection information and data information to be shared, to the second electronic device that is connected for communication, e.g., as illustrated in FIG. 9, FIG. 11, or FIG. 15.

In operation 1813, the first electronic device displays an indication that the communication connection with the second electronic device is restricted, when communication connection restriction information is received from the second electronic device in operation 1807.

For example, the first electronic device may determine that the establishment of the communication connection with the second electronic device is not granted, when response information with respect to the communication connection request information is not received during a reference time after the communication connection request information is transmitted.

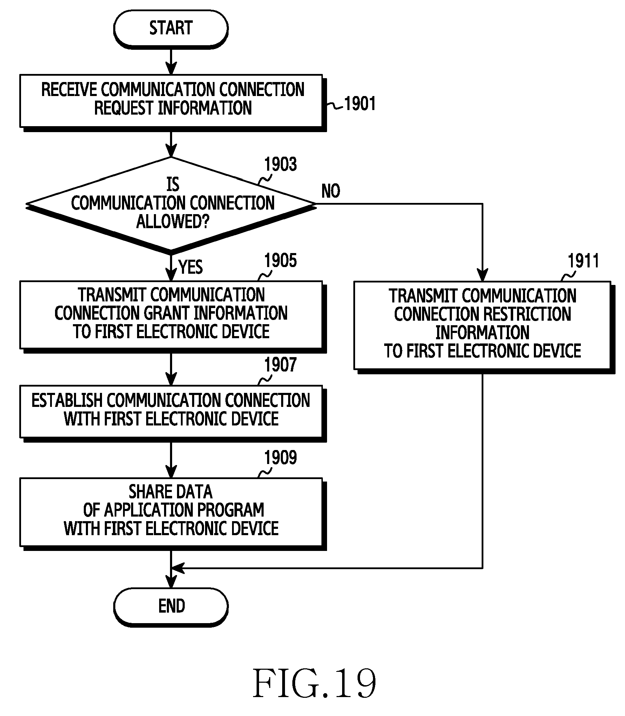

FIG. 19 is a flowchart illustrating a method of a second electronic device establishing a communication connection for sharing data with a first electronic device according to an embodiment of the present disclosure.

Referring to FIG. 19, in operation 1901, a second electronic device (for example, the second electronic device 120 or 802) may receives communication connection request information from a first electronic device (for example, the first electronic device 110 or 800).

In operation 1903, the second electronic device determines whether establishment of a communication connection with the first electronic device is allowed. For example, the second electronic device may determine whether it is possible to establish the communication connection with the first electronic device, based on a load on the second electronic device, a load on a communication network, a signal strength, etc.

In operation 1905, the second electronic device transmits, to the first electronic device, communication connection grant information, in response to the communication connection request information, when the second electronic device determines that it is possible to establish the communication connection with the first electronic device in operation 1903.

In operation 1907, the second electronic connects to the first electronic device for communication.

In operation 1909, the second electronic device shares data of an application with the first electronic device that is connected for communication. For example, the second electronic device may execute an application corresponding to application selection information, based on data received from the first electronic device that is connected for communication, as illustrated in FIG. 13 or 17.

In operation 1911, the second electronic device transmits, to the first electronic device, communication connection restriction information, when the second electronic device determines that it is not allowed to establish the communication connection with the first electronic device in operation 1911.

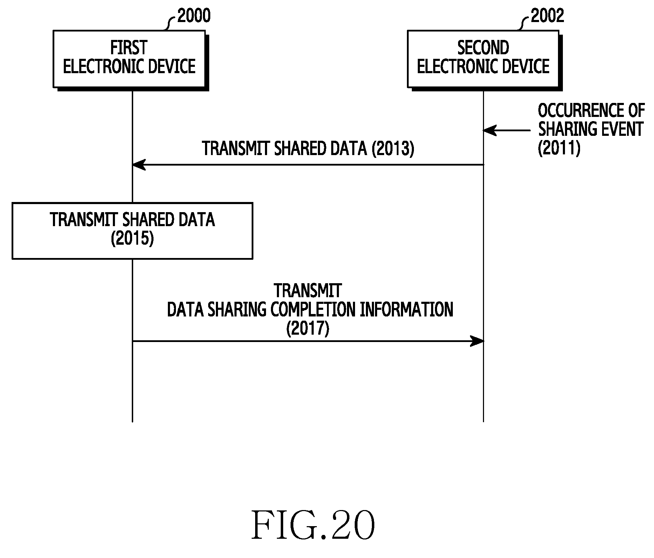

FIG. 20 is a signal flow diagram illustrating a method for sharing data according to an embodiment of the present disclosure.

Referring to FIG. 20, a first electronic device 2000 (for example, the first electronic device 110) may establishes a communication connection with a second electronic device 2002 (for example, the second electronic device 120), wirelessly (for example, in a WLAN) or wired.

The second electronic device 2002 may detect data to be shared with the first electronic device 2000 in response to an occurrence of a sharing event in operation 2011. The second electronic device 2002 transmits shared data to the first electronic device 2000 in operation 2013. For example, the shared data includes data detected from the second electronic device 2002 and application information associated with the data.

The first electronic device 2000 executes an application corresponding to the shared data, by analyzing the characteristic of the data received from the second electronic device 2002, in operation 2015. For example, the first electronic device 2000 executes the application corresponding to the shared data, and displays an execution screen corresponding to the shared data.

In operation 2017, the first electronic device 2000 transmits data sharing completion information to the second electronic device 2002.

Alternatively, the transmission of the data sharing completion information of the first electronic device 2000 may be omitted.

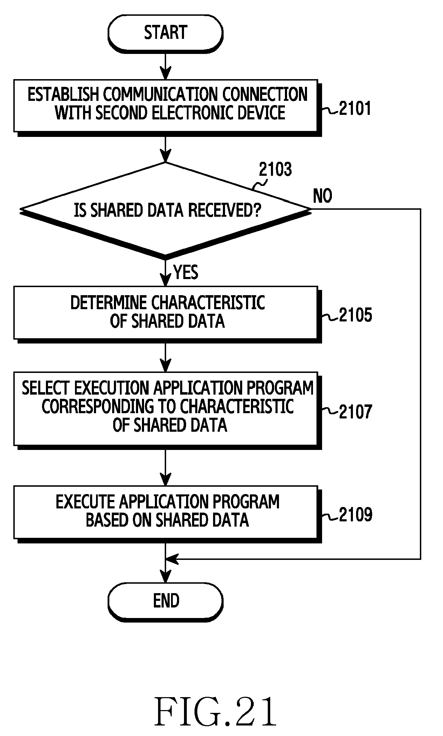

FIG. 21 is a flowchart illustrating a method of a first electronic device executing an application based on data provided from a second electronic device according to an embodiment of the present disclosure.

Referring to FIG. 21, in step 2101, a first electronic device (for example, the first electronic device 110 or 2000) may establishes a communication connection with a second electronic device, wirelessly or wired.

In operation 2103, the first electronic device determines whether shared data is received from the second electronic device that is connected for communication.

In operation 2105, the first electronic device determines the characteristic of the shared data, when the shared data is received from the second electronic device in operation 2103. For example, the first electronic device analyzes the configuration information (e.g., text, images, etc.) of the shared data.

In operation 2107, the first electronic device selects an application corresponding to the shared data based on the characteristic of the shared data. For example, the first electronic device selects an application for executing the shared data based on the configuration information of the shared data.

In operation 2109, the first electronic device executes the application corresponding to the shared data, and displays an execution screen corresponding to the shared data. For example, when the shared data is an Internet address (or Internet articles), the first electronic device executes a web browser and displays a web page corresponding to the shared data on a display.

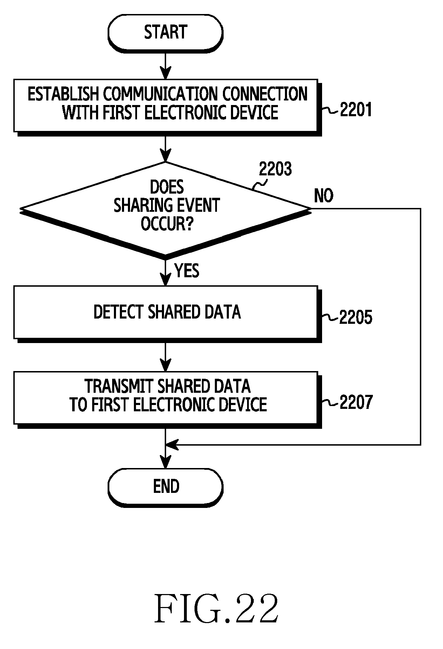

FIG. 22 is a flowchart illustrating a method of a second electronic device transmitting data to a first electronic device according to an embodiment of the present disclosure.

Referring to FIG. 22, in operation 2201, the second electronic device (for example, the second electronic device 120 or 2002, or the electronic device 200) may establishes a communication connection with the first electronic device, wirelessly or wired.

In operation 2203, the second electronic device determines whether a sharing event occurs. For example, the second electronic device determines whether the selecting of an application icon corresponding to the sharing event is detected. The second electronic device may determine whether selecting a menu corresponding to the sharing event is detected.

In operation 2205, the second electronic device detects data to be shared with the first electronic device, when the sharing event occurs in operation 2203. For example, the second electronic device may detect an Internet address to be shared with the first electronic device or may detect at least some of the Internet articles to be shared with the first electronic device.

In operation 2207, the second electronic device transmits shared data to the first electronic device.

According to various embodiments of the present disclosure, an operation method of an electronic device is provided. The method may include determining an application list of a partner electronic device, displaying the application list of the partner electronic device, receiving a selection of an application for sharing data from the application list, and transmitting, to the partner electronic device, the application selection information and shared data information, based on the selected application.

According to various embodiments of the present disclosure, the operation of determining the application list includes transmitting, to the partner electronic device, a request signal requesting the application list from the partner electronic device through a communication connection with the partner electronic device, and receiving the application list from the partner electronic device in response to the request signal.

According to various embodiments of the present disclosure, the shared data information includes execution data of the selected application.

According to various embodiments of the present disclosure, the method further includes receiving screen sharing data from the partner electronic device, displaying an execution screen of the selected application, based on the screen sharing data, detecting shared data of the selected application, based on the execution screen of the application, and transmitting the shared data of the selected application to the partner electronic device.

According to various embodiments of the present disclosure the operation of displaying the execution screen includes displaying the execution screen of the selected application in a different display area than a display area of an execution screen of at least one other application.

According to various embodiments of the present disclosure, the screen sharing data includes a structure of the execution screen and information for an object included in the execution screen.

According to various embodiments of the present disclosure, an operation method of an electronic device is provided. The method includes transmitting an application list to a partner electronic device, receiving, from the partner electronic device, application selection information and shared data information, and executing an application based on the application selection information and the shared data information.

According to various embodiments of the present disclosure, the method further includes receiving, from the partner electronic device, a request signal requesting the application list, generating the application list in response to the request signal.

According to various embodiments of the present disclosure, the operation of generating the application list includes selecting at least one application that is sharable with the partner electronic device, from among applications installed in the electronic device, and generating the application list using the selected at least one application.

According to various embodiments of the present disclosure, the operation of executing the application includes displaying an execution screen of the application.

According to various embodiments of the present disclosure, the method further includes transmitting, to the partner electronic device, screen sharing data corresponding to the application, receiving shared data of the application from the partner electronic device, and displaying an application execution screen corresponding to the shared data of the application.

An electronic device and a method according to an embodiment of the present disclosure transmits, to a partner electronic device, data to be shared with the partner electronic device and application information based on an application program list of the partner electronic device, in order to smoothly share data among heterogeneous electronic devices.

Herein, the term "module" may mean a unit including one of hardware, software, and firmware or a combination of two or more of them. The term "module" may be interchangeably used with, for example, the term "unit", "logic", "logical block", "component", or "circuit". A "module" may be a minimum unit of an integrated component element or a part thereof. A "module" may be a minimum unit for performing one or more functions or a part thereof. A "module" may be mechanically or electronically implemented. For example, a "module" may include at least one of an Application-Specific Integrated Circuit (ASIC) chip, a Field-Programmable Gate Arrays (FPGA), and a programmable-logic device for performing operations which are currently known or are to be developed hereinafter.

At least some of the devices (for example, modules or functions thereof) or the method (for example, operations) according to the present disclosure may be implemented by a command stored in a computer-readable storage medium in a programming module form. The instruction, when executed by a processor (e.g., the processor 220), may cause the one or more processors to execute the function corresponding to the instruction. The computer-readable storage medium may be, for example, the memory 130.

The computer readable recoding medium may include a hard disk, a floppy disk, magnetic media (e.g., a magnetic tape), optical media (e.g., a Compact Disc Read Only Memory (CD-ROM) and a Digital Versatile Disc (DVD)), magneto-optical media (e.g., a floptical disk), a hardware device (e.g., a Read Only Memory (ROM), a Random Access Memory (RAM), a flash memory), etc. In addition, the program instructions may include high class language codes, which can be executed in a computer by using an interpreter, as well as machine codes made by a compiler. The aforementioned hardware device may be configured to operate as one or more software modules in order to perform the operation of the present disclosure, and vice versa.

The programming module according to the present disclosure may include one or more of the aforementioned components or may further include other additional components, or some of the aforementioned components may be omitted. Operations executed by a module, a programming module, or other component elements according to various embodiments of the present disclosure may be executed sequentially, in parallel, repeatedly, or in a heuristic manner. Further, some operations may be executed according to another order or may be omitted, or other operations may be added. Further, the embodiments disclosed in this document are only for the description and understanding of technical contents and do not limit the scope of the present disclosure. Accordingly, the scope of the present disclosure should be construed as including all modifications or various other embodiments based on the technical idea of the present disclosure.

While the present disclosure has been particularly shown and described with reference to certain embodiments thereof, it will be understood by those of ordinary skill in the art that various changes in form and details may be made therein without departing from the spirit and scope of the present disclosure as defined by the following claims and their equivalents.

## Claims

1. A method of an electronic device, the method comprising:
determining an application list of a partner electronic device;
displaying the application list of the partner electronic device;
receiving a selection of an application for sharing data from the application list; and
transmitting, to the partner electronic device, application selection information and shared data information, based on the selected application.

2. The method of claim 1, wherein determining the application list comprises:
transmitting, to the partner electronic device, a request signal requesting the application list from the partner electronic device through a communication connection with the partner electronic device; and
receiving the application list from the partner electronic device in response to the request signal.

3. The method of claim 1, further comprising:
receiving screen sharing data from the partner electronic device;
displaying an execution screen of the selected application, based on the screen sharing data;
detecting shared data of the selected application, based on the execution screen of the application; and
transmitting the shared data of the selected application to the partner electronic device.

4. The method of claim 3, wherein displaying the execution screen comprises displaying the execution screen of the selected application in a different display area than a display area of an execution screen of at least one other application.

5. A method of an electronic device, the method comprising:
transmitting an application list to a partner electronic device;
receiving, from the partner electronic device, application selection information and shared data information; and
executing an application based on the application selection information and the shared data information.

6. The method of claim 5, further comprising:
transmitting, to the partner electronic device, screen sharing data corresponding to the application;
receiving shared data of the application from the partner electronic device; and
displaying an application execution screen corresponding to the shared data of the application.

7. An electronic device comprising:
a communication interface configured to establish a communication connection with a partner electronic device;
a display; and
a processor configured to:
determine an application list of the partner electronic device;
display, on the display, the application list of the partner electronic device on the display;
receive a selection of an application for sharing data from the application list; and
transmit, to the partner electronic device, application selection information and shared data information, through the communication interface, based on the selected application.

8. The electronic device of claim 7, wherein the communication connection with the partner electronic device is wireless, and
wherein the wireless communication includes at least one of Bluetooth, Bluetooth Low Energy (BLE), and Local Area Network (LAN).

9. The method of claim 1 or the electronic device of claim 7, wherein the shared data information includes execution data of the selected application.

10. The electronic device of claim 7, wherein the processor is further configured to:
receive screen sharing data from the partner electronic device through the communication interface;
display, on the display, an execution screen of the selected application, based on the screen sharing data;
detecting shared data of the selected application, based on the execution screen of the application; and
transmitting the shared data of the selected application to the partner electronic device through the communication interface.

11. The electronic device of claim 10, wherein the display displays the execution screen of the selected application in a different display area than a display area of an execution screen of at least one other application.

12. The method of claim 3 or the electronic device of claim 10, wherein the screen sharing data includes a structure of the execution screen and information for an object included in the execution screen.

13. An electronic device, the device comprising:
a communication interface configured to establish a communication connection with a partner electronic device; and
a processor configured to:
transmit an application list to the partner electronic device through the communication interface,
receive application selection information and shared data information from the partner electronic device, and
execute an application based on the application selection information and the shared data information.

14. The electronic device of claim 13, further comprising:
a memory,
wherein the processor is further configured to store screen configuration data corresponding to the execution screen of the application in a separate memory area that is distinguished from another application.
